# EUROPÄISCHE PATENTSCHRIFT

(11) **EP 1 080 408 B1**
(45) Veröffentlichungstag und Bekanntmachung des Hinweises auf die Patenterteilung: **05.12.2001**
(21) Anmeldenummer: 99923520.3
(22) Anmeldetag: 04.05.1999
(51) Int. Cl.: G06F 9/445, G06F 11/14, G06F 15/177

(54) **STEUERUNGSSYSTEM ZUR STEUERUNG DER INBETRIEBNAHME EINES VERTEILTEN SYSTEMS**
CONTROL SYSTEM FOR CONTROLLING THE INITIATION OF A DISTRIBUTED SYSTEM
SYSTEME DE COMMANDE POUR COMMANDER LA MISE EN SERVICE D'UN SYSTEME REPARTI

(30) Priorität: 19.05.1998 EP 98109102
(43) Veröffentlichungstag der Anmeldung: 07.03.2001
(73) Patentinhaber: SIEMENS AKTIENGESELLSCHAFT, 80333 München (DE)
(72) Erfinder: NIESSEN, Jürgen, D-83670 Bad Heilbrunn (DE); KLEIN, Holger, D-81476 München (DE); NIEDERAU, Bernd, D-83607 Holzkirchen (DE); WICH, Klaus, D-80333 München (DE)
(86) Internationale Anmeldenummer: EP9903046
(87) Internationale Veröffentlichungsnummer: WO9960477

(56) Entgegenhaltungen:
- WO-A-97/01815
- DE-A- 3 130 409
- US-A- 5 568 375

## Beschreibung

Topologisch flexible und große, verteilte Systeme erfordern bei ihrer Gesamtinbetriebnahme (Erstinbetriebnahme oder Wiederanlauf des Gesamtsystems zur Neutralisation von HW/SW-Fehlern) eine Koordination der Inbetriebnahme ihrer einzelnen Komponenten. Unter einer Komponente wird im folgenden verstanden: Prozessor mit einer SW-Funktion oder mit mehreren SW-Funktionen oder einer Gruppe von Prozessoren, die jeweils eine, mehrere oder gemischte SW-Funktionen enthalten. Unter Inbetriebnahme einer Komponente wird das Laden der SW-Funktion(en) auf den HW-Teil der Komponente sowie das Initialisieren und Aktivieren der SW-Funktion(en) verstanden (Davon zu unterscheiden ist Inbetriebnahme von SW Prozessen auf einer einzelnen Plattform, dessen Betriebssystem bereits soweit in Betrieb ist, sodaß ein Prozeßgeschehen möglich ist, wie sie z.B. in Dokument WO 97 01815 A beschrieben ist).

Eine koordinierte Inbetriebnahme des Systems ist u.a. deshalb notwendig, weil die zu aktivierenden Komponenten SW-Funktionen (Code und Daten) benötigen, die sie zur eigenen Inbetriebnahme und der Inbetriebnahme von in der Hierarchie nachgeschalteten Komponenten brauchen. Eine zeitlich und topologisch gestaffelte Inbetriebnahme bei einem Gesamtanlauf ist damit notwendig, im Unterschied zu lokalen oder anderen Netzen, bei denen sich die Netzkomponenten bei ihrem Master/Server anmelden, bzw. es solange versuchen, bis dieser erreichbar ist.

Ein Beispiel für große verteilte Systeme sind Vermittlungssysteme für Breitbandanwender (EWSX oder in EWSD der SSNC). In diesen Systemen werden unterschiedliche SW-Funktionen auf mehrere Prozessoren verteilt. Außerdem sind diese Systeme durch ein verteiltes Betriebssystem und durch eine verteilte Datenbasis gekennzeichnet. Verschiedene Komponentengruppen haben direkte oder indirekte Abhängigkeiten zu anderen Komponenten des Systems bei einem Gesamtanlauf.

Die Kunden benötigen zum einen topologisch sehr unterschiedliche Systeme, d.h. die Anzahl der Prozessoren des Systems sowie deren Verbindungsstruktur kann variieren, und die Kunden benötigen zum anderen funktional sehr unterschiedliche Systeme, d.h. die Verteilung der SW-Funktionen auf die unterschiedlichen Prozessoren des Systems hängt von den Kundenanforderungen ab.

Desweiteren werden ständig neue Komponenten entwickelt, die in das bestehende System im Laufe der fortschreitenden Entwicklung integriert werden.

Aus dem Gesagten ergeben sich folgende Anforderungen an die Steuerungs-SW für einen Gesamtanlauf:

Die Steuerungssoftware (Anlaufsteuerungs-Komponente) für die Koordination der Inbetriebnahme (weitere verwendete Begriffe für "Inbetriebnahme" : Aktivierung, Hochlauf, Anlauf) des Gesamtsystems sollte so entworfen werden, daß sie die Inbetriebnahme des Systems unabhängig von den Änderungen der Architektur/Topologie beherrscht.

Insbesondere sollte die Inbetriebnahme hardwareunabhängig gestaltet werden, so daß z.B. auch die Erweiterung oder der Wegfall ganzer Teile in der Topologie durch die Steuerungssoftware beherrscht werden. Das hat auch eine höhere Stabilität und Sicherheit bei der Aktivierung des Gesamtsystems zur Folge.

Der Erfindung liegt die Aufgabe zugrunde, ein Steuerungssystem anzugeben, das die genannten Forderungen erfüllt.

Diese Aufgabe wird durch ein Steuerungssystem nach Anspruch 1 erfüllt.

Im folgenden wird zunächst die bisherige Implementierung des Anlaufs bei dem speziellen Vermittlungssystem EWSD der Firma Siemens näher erläutert.

Bereits bei EWSD werden die Anzahl der LTG'n, DLU'n und deren Daten (Ports) ebenfalls aus der Datenbasis entnommen, was eine gewisse Flexibilität schafft

### Aber :

* Die Reihenfolge der Aktivierung der einzelnen Komponenten ist hart codiert (für jede Komponente gibt es eigene Routinen für die Aktivierung und die Synchronisation).
* Der Aktivierungsfolgezeitpunkt der einzelnen Komponenten ist hart codiert, d.h., wie weit muß die vorher gestartete Komponente sein (Erfüllen der Voraussetzungen für den Start nachfolgender Komponenten), bis die nächste Komponentengruppe zur Aktivierung gestartet werden kann.
* Redundanzprinzipien sind hart codiert (Message Buffer/ Switching Network).
* Die Behandlung von LTG-Typen ist unterschiedlich und hart codiert.

Bei dem System EWSD gibt es noch einige zusätzliche Gesichtspunkte (andere Voraussetzungen):

EWSD hat eine begrenzte Anzahl von Prozessoren (6 Prozessoren) und eine starre Hierarchie der Prozessoren EWSD ist kein System mit verteilter Datenbasis.
EWSD besitzt einen gemeinsamen Speicher für Daten (Common Memory).
EWSD ist kein System mit verteiltem Betriebssystem.
EWSD hat einen starren Funktionssplitt, d.h. keine beliebige Verteilung von SW-Funktionen auf die Prozessoren.

### Nachteile:

Wird/müßte das EWSD-System erweitert werden, sind Änderungen in der Software, die die Aktivierung steuert, notwendig. (Hoher Änderungsaufwand: Analyse, Design, Implementierung, Test ...)

Mit der in EWSD bislang praktizierten Art, die Systemperipherie hart codiert in Betrieb zu nehmen, sind die zukünftigen Kundenanforderungen bzgl. Flexibilität von Vermittlungssystemen, insbesondere bzgl. der Topologie, nicht mehr kostengünstig und schnell zu befriedigen.

Im folgenden wird die Erfindung sowie deren Umgebung näher erläutert, wobei eine Zeichnung zur Unterstützung der Erläuterungen dient. Die Zeichnung umfaßt 5 Figuren.

Der Kunde eines verteilten Systems legt gemeinsam mit dem Hersteller zunächst sein Gesamtsystem fest. Dabei spielen Anzahl und Art der Anschlüsse (Teilnehmer, Trunks, Links) eine entscheidende Rolle, d.h. letztendlich werden damit die Art und Anzahl der zu aktivierenden Komponenten festgelegt (Komponenten, die der Hersteller schon hat oder eventuell noch entwickeln muß). Z.B. wird durch den Leistungsanforderungsparameter "Durchsatz" (Vermittlungskapazität) auch die Größe und Beschaffenheit (Art der Komponentengruppen) des Koppelfeldes bestimmt (20, 40, 160 Gbit) und die Anzahl von Prozessoren mit Vermittlungsaufgaben. Andere Faktoren wie Netztopologie und Redundanzprinzipien des vom Kunden spezifizierten Vermittlungssystemes beeinflussen ebenfalls die Topologie der Komponentengruppen.

Die Informationen (bzw. Daten) über die für die Inbetriebnahme des Systems zu aktivierenden Komponentengruppen, deren Komponenten und dazugehöriger weiterer Daten (insbesondere Daten zur Steuerung der Reihenfolge und des zeitlichen Ablaufs der Inbetriebnahme) werden von der Steuerungs-SW aus der Datenbasis ermittelt.

Das genannte "Ermitteln aus der Datenbasis" erfolgt mehrstufig (siehe auch weiter unten: Pseudocode für "Lesen Daten"):

### Stufe 1:

Es gibt 'Dateien' (PROFILEs), in denen das Objektmodell (Gerüst bzw. Objektklassen mit Eigenschaften) der Datenbasis enthalten ist. Ein Softwarekomplex erzeugt aus diesen Dateien die Datenbasis. Während in den PROFILE-Objektklassen die Instanzen (Elemente) schon enthalten (Analysezeit s.u.) sind, sind andere Objektklassen mit ihren Eigenschaften zwar ebenfalls bereits erzeugt, aber noch leer.

### Stufe 2:

Die Instanzen (z. B. Komponenten) der genannten anderen Objektklassen werden dann Schritt für Schritt eingebracht, z.B. vom Betreiber. Für die Zuordnung einer Komponente zu einer Komponentengruppe wird dann die entsprechende PROFILE Objektklasse herangezogen.

Das Datenbanksystem wird in logischen Objektklassen mit bestimmten Eigenschaften, z.B. die Komponentengruppen-PROFILE-Objektklasse(eine quasi semipermanente Tabelle), abgebildet, die Instanzen enthalten. Die Steuerungs-SW liest z.B. alle aus einer PROFILE-Objektklasse erzeugten Instanzen (Komponenten), wobei eine PROFILE-Objektklasse zur Analyse- bzw. Entwicklungszeit (und vor der Produktion des APSes von a) Kunde b) Vertrieb, c) Systemengineering oder/und d)Entwicklung) spezifiziert wird und dynamisch nicht veränderbar ist. Aus den PROFILE-Objektklassen werden durch Instanzenbildung (Komponentenbildung) die Komponenten einer sogenannten Komponentengruppen erzeugt, die auch zur Erstpopulation des Datenbanksystems herangezogen werden. D.h. diese Objektklassen werden zum 'Aurfüllen' (nicht Erzeugung) weiterer Objektklassen verwendet, deren Daten und Instanzen dynamisch veränderbar sind. Z.B. kann der Betreiber während des Systembetriebs Komponenten hinzufügen oder entfernen oder Daten der Komponenten verändern.

Mit Hilfe von Daten weiterer Objektklassen filtert/bestimmt die Steuerungs-SW aus den in der Datenbasis vorhandenen Komponenten die sogenannten "gefilterten Komponenten" heraus (je nach Art des Gesamtsystems werden nur die Komponenten bestimmter Komponentengruppen in die Inbetriebnahme miteinbezogen werden, die für eine Systemfunktion benötigt werden (Sache des Betreibers). Nur diese gefilterten Komponenten werden von der Steuerungs-SW für die Inbetriebnahme aktiviert.

Die genannte Filterung erfolgt über zugelassene Zustände der vorhandenen Komponenten, wobei die zugelassenen Zustände von einer einstellbaren Sichtweite abhängen (durch die Sichtweite wird also festgelegt, bei welchem für eine Komponente in der Datenbasis markierten Zustand bzw. bei welchen für eine Komponente markierten Zuständen eine vorhandene Komponente für die Inbetriebnahme herangezogen wird). Die Standardfilterung läßt nur diejenigen Komponenten zu, deren Zustand in der Datenbasis als "aktiv" markiert ist. Wenn die Standardfilterung nicht ausreicht, um eine erfolgreiche Inbetriebnahme zu gewährleisten, kann die Sicht z.B. vom Betreiber (Administrator) und/oder automatisch, d.h. vom System, erweitert werden.

(Grund für die genannte Erweiterung: Fehlerhafte, d.h. nicht als "aktiv" markierte Komponenten können z.B. zu heiß gewordene oder sporadisch fehlerbehaftete HW oder Komponenten sein, deren Zustands-Aufzeichnung bzw. Zustands-Markierung von der Fehlererkennungs-SW von "aktiv" auf "fehlerhaft" geändert wurde. Der wahre Zustand dieser Komponenten könnte nunmehr durchaus der Zustand "aktiv" sein, so daß die Einbeziehung dieser Komponenten in den Anlauf nunmehr einen Totalausfall verhindern würde. Eine ähnlicher Fall könnte auch bei durch andere Komponenten hervorgerufenen HW-Fehlern vorliegen, die jetzt ausgetauscht wurden, aber vor der Einzelkonfiguration durch eine systemweite Anlaufstufe unterbrochen wurden oder bei nachgeschalteten Komponenten (sind allerdings nicht als fehlerhaft sondern als 'not accessible' markiert), wenn die vorgeschaltete Komponente defekt war, aber inzwischen ausgetauscht wurde. Auch in diesen Fällen könnte eine Aktivierung nun durchaus zu einem erfolgreichen Anlauf führen).

Definition von Zuständen ist u.a. für die Maintenance (MTC) nötig. Die Steuerungs-SW bedient sich dieser Zustände.

Allgemein zum Verständnis:
Klassifizierung von Komponenten-Zuständen:
Administrativer Zustand (vom Betreiber verwaltet)
Fehlerzustand (vom System verwaltet)
Operativer Zustand (vom System verwaltet)

| Zustände semipermanent | | Zustände Transient operativer Zustand |
|---|---|---|
| Admin. Zustand | Fehlerzustand | |
| UBL (unblocked) | CLR (clear=ok) | ACT (aktiv) |
| UBL | FLT (faulty=leicht fehlerbehaftet) | OOP (out of operat.) |
| UBL | UNA (unavailable) | OOP |
| MBL (MTC blocked) | * | OOP |
| RSV (reserved) | * | OOP |

Dadurch sind verschiedene Sichtweiten selektierbar/verwendbar (siehe vorher).
a) normaler Hochlauf = alle als "aktiv" gekennzeichneten Komponenten
b) Ersthochlauf = wie a) und alle als "reserviert" gekennzeichneten Komponenten
c) Problemsituationen besser lösbar durch Erweiterung der Sichtweite durch Betreiber oder systemintern
   * wie a) und alle als "unavailable" gekennzeichneten Komponenten
   * wie a) und alle als "unavailable" und "MTC blocked" gekennzeichneten Komponenten

### Bemerkung:

Evtl. kann man auch Fehler der Betreiber kompensieren. z.B. Deaktivierung einer zentralen Komponente (MBL- Maintenance Blocked) ---> Hochlaufeskalation ---> Mitnahme auch der MBL-Komponenten im Falle eines Totalausfalles

Der Betreiber kann mittels Kommando die bisher festgelegte Sicht zu einer erweiterten Sicht (extended scope) erweitern, d.h. es werden dann auch solche Komponenten in die Inbetriebnahme einbezogen, die als fehlerhaft und/oder reserviert und/oder not accessible markiert sind.

### Desweiteren kann die hier beschriebene

Steuerungssoftware automatisch ihre Sicht erweitern, wenn sie in Zusammenarbeit mit der Totalausfallerkennung bemerkt, daß die von ihr durchzuführende Inbetriebnahme des Gesamtsystems nicht die von dem Kunden geforderten Systembetrieb als Ganzes bereitstellen kann. Die genannte Zusammenarbeit funktioniert wie folgt:

Die Steuerunas-SW befragt während des Hochlaufs mehrmals die Totalausfallerkennung (z.B. vor dem Beginn des Anlaufs, während des Anlaufes (nach dem physikalischen Ansprechen aller bei dem Anlauf beteiligten Komponenten) oder vor dem Anstoß einer länger dauernden Nachbehandlung nicht erfolgreich aktivierter Komponenten). Die erste Befragung erfolgt vor dem Beginn des Anlaufs. Die Totalausfallerkennung betrachtet bei ihrer ersten Befragung alle für die Inbetriebnahme des Gesamtsystems zu aktivierenden Komponenten und prüft anhand deren Zustände (die Zustände entnimmt sie der Datenbasis), ob die durchzuführende Aktivierung die von dem Kunden erwünschten Gesamtsystem-Funktionen bereitstellen kann. Wird diese Frage durch die Prüfung mit "nein" beantwortet, so wird auf Totalausfall erkannt, die Sicht erweitert (s.o.) und die Totalausfallerkennung danach (nicht unmittelbar danach, sondern erst während des Anlaufes s.o.) erneut aufgerufen. Es wird nicht sofort befragt, weil die Zustände nicht sofort aktualisiert werden und die Totalausfallerkennung das gleiche Ergebnis bringen würde. Die Zustände werden im Laufe der Aktivierung aktualisiert.

Die zu aktivierenden Komponenten werden zur Analyse-bzw. Entwicklungszeit (siehe oben) hinsichtlich ihres Typs in Gruppen, sog. Komponentengruppen, eingeteilt. Zu jeder Komponentengruppe (A,B,C,D) können eine beliebige Anzahl (durch den Kunde bestimmbar) von Komponenten desselben Komponententyps gehören. Erreicht die Anzahl von Komponenten in einer (Komponenten-)Gruppe einen Maximalwert (softwaretechnisch bestimmt), werden interne Untergruppen des gleichen Komponententypes gebildet und entsprechend der internen Startfolgezeit gestartet (auch Datum in der Datenbasis für eine Komponentengruppe).

Desweiteren werden die Komponentengruppen zur Analyse-bzw. Entwicklungszeit in Hierarchien eingeteilt und zwischen den Hierarchien werden Reihenfolgen bestimmt.

Durch die Einteilung in Hierarchien wird sichergestellt, daß der Start der Aktivierung einer Folgehierarchie erst dann erfolgen kann, wenn alle Komponenten einer bereits "gestarteten", d.h. in der Aktivierungsphase befindlichen Hierarchie die Voraussetzungen für den Start der Aktivierung der Folgehierarchie erfüllen.

Innerhalb von Hierarchien, d.h. zwischen Komponentengruppen, wird eine Aktivierungsfolgezeit festgelegt (Komponenten melden der Steuerungs-SW zu definierten Punkten (Synchronisationspunkten) den aktuellen Zustand der Aktivierung (aktiv oder nicht mehr aktiv). Die Aktivierungsfolgezeit definiert diesen Synchronisationspunkt oder Aktivierungsstand: Wenn alle Komponenten einer Komponentengruppe bzw. alle Komponentengruppen einer zusammengefaßten Hierarchie einen entsprechenden Aktivierungsstand/ Synchronisationspunkt gemeldet haben, ist z.B. der Start der Aktivierung einer der folgenden Komponentengruppe oder Komponentengruppen möglich/notwendig. Durch Setzen der Aktivierungsfolgezeit auf 'Nicht Warten' können Komponentengruppen innerhalb einer Hierarchie auch parallel aktiviert werden).

Die Erfindung ermöglicht desweitern das Redundanzprinzip (z.B. in der EWSX-Linie) beim Gesamthochlauf des Systems zum Halten stabiler Verbindungen (PVC's). Das wird durch die planeweise Inbetriebnahme (seitenweise: zunächst Seite 0, dann Seite 1 von AMX-Ultimate, ASN - Asynchrones Switching Network und den AMX-Dependant) sichergestellt. Die Steuerungssoftware beherrscht aber auch die gleichzeitige Inbetriebnahme der Planes anderer Systeme (z. B. des Systems EWSD). Dies wird einfach durch ein anderes PROFILE (= andere Version) mit anderen Daten (Hierarchien, Aktivierungsreihenfolgen, ...) erreicht.

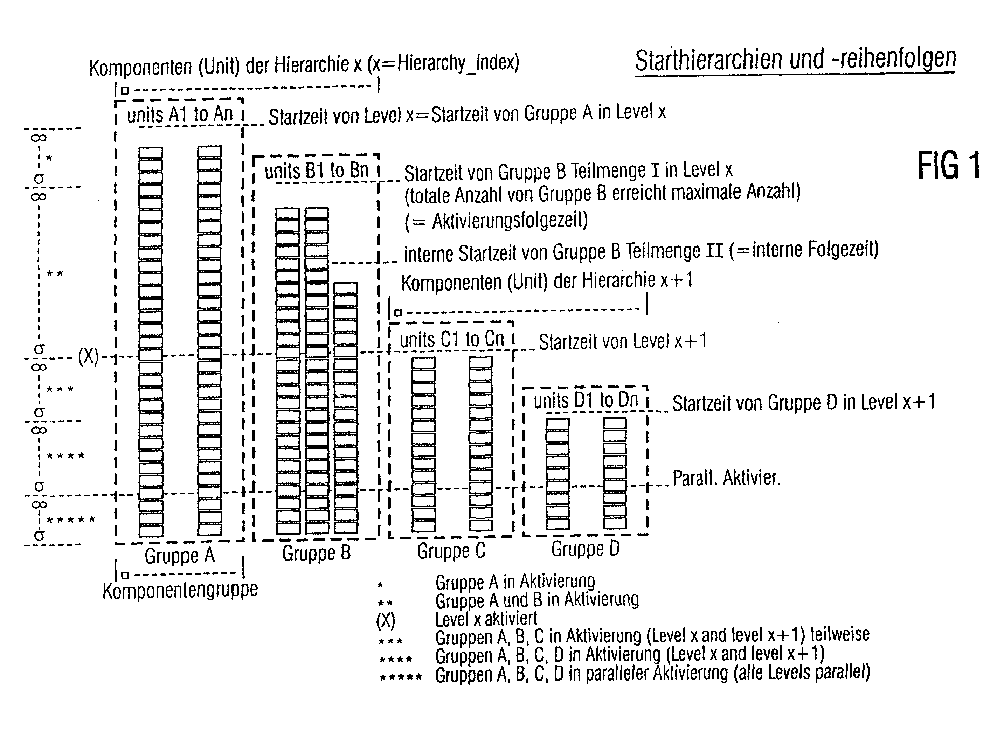

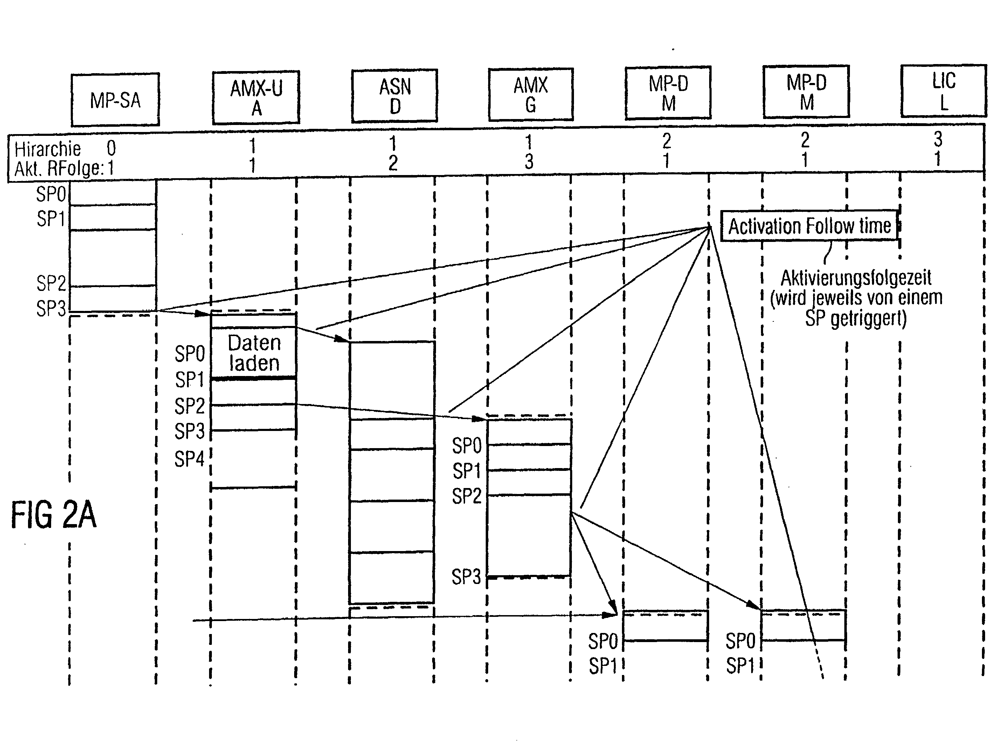

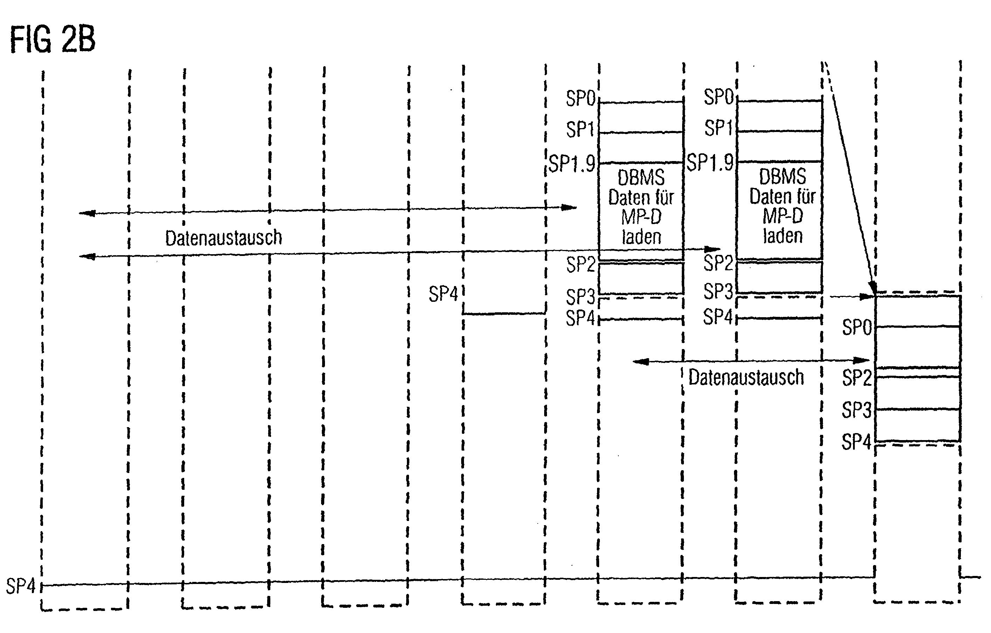

FIG 1 und FIG 2 zeigen die graphische Darstellung der vorherigen Aussagen.

Es folgen bsph. Pseudo-Codes für "Lesen Daten" und "Start der Aktivierung der Periphery", die i.V.m. den Figuren und dem vorher Gesagten verständlich sind.

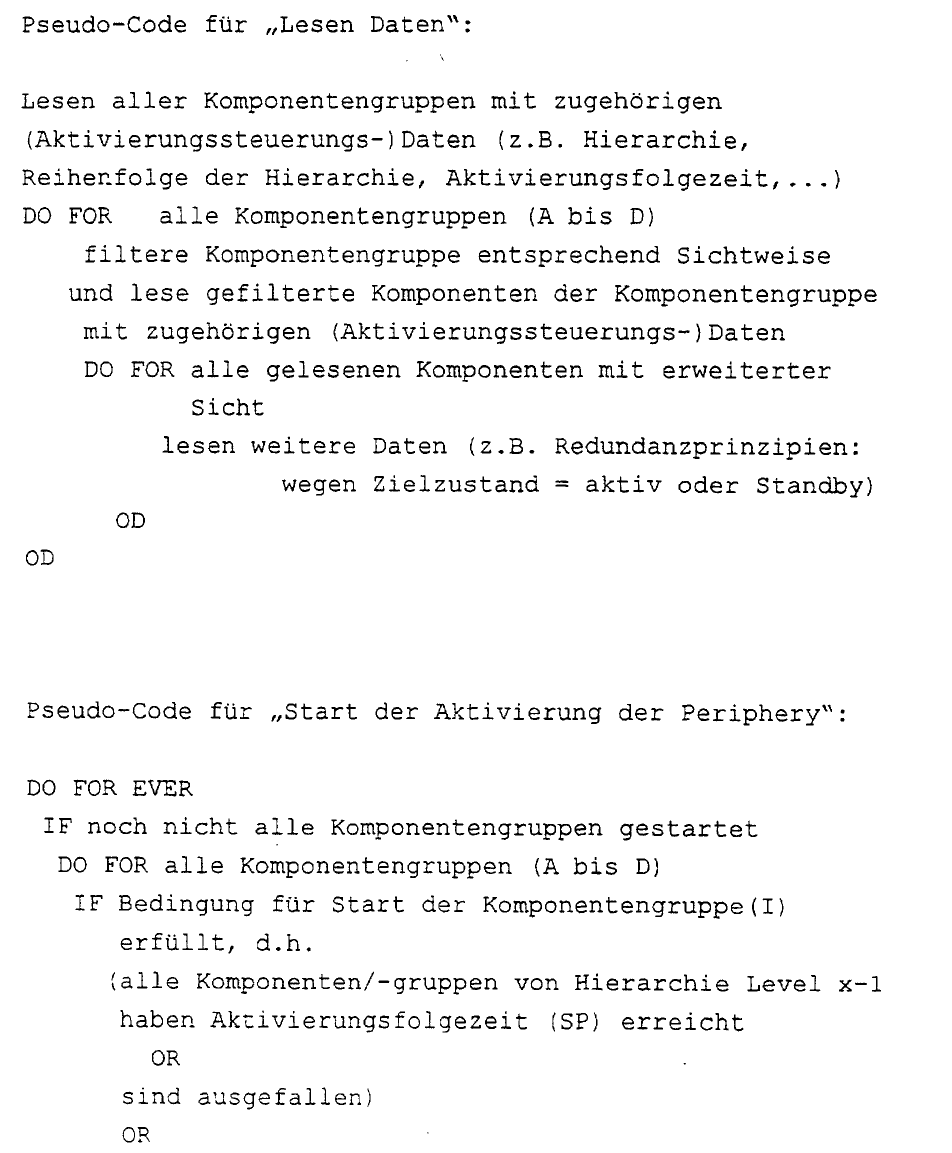

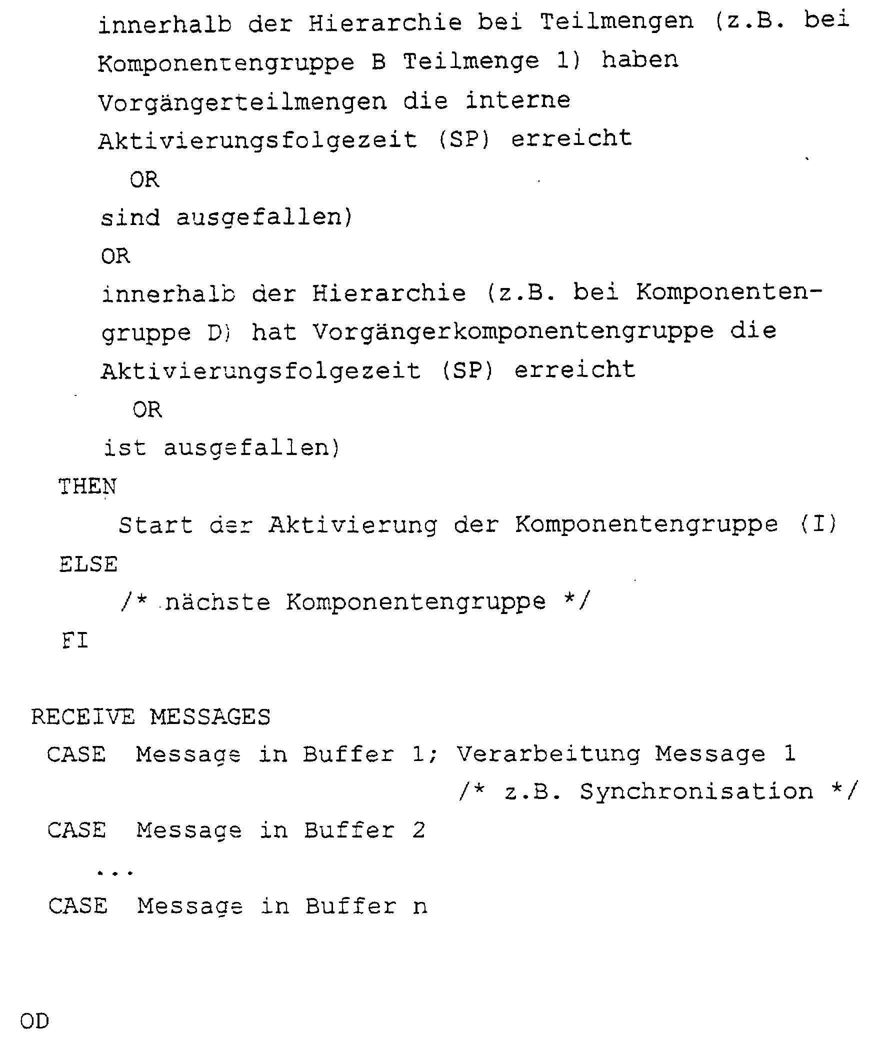

### Vorteile der Erfindung:

* Nahezu unbegrenzte Anzahl von Komponenten möglich.
* Lösung auch für Systeme mit verteilter Datenbasis und verteiltem Betriebssystem anwendbar (z.B. EWSX, SSNC siehe weiter unten). Durch Hierarchien und Reihenfolgen von Komponentengruppen ist die richtige Steuerung der SW-Eunktions-Verteilung auf die Komponenten gewährleistet.
* Lösung ermöglicht, beliebig Funktionen zu verteilen.
* Alle Daten werden der Datenbasis entnommen.
* Der Hochlauf/Aktivierung des Systems ist datengesteuert, und zwar sowohl bezüglich der Aktivierungsreihenfolge als auch bezüglich der Aktivierungsfolgezeitpunkte.
* Flexible Erweiterungen oder Änderungen des Systemausbaues/Topologie sind möglich, ohne die Software zu ändern (auch ganze Teile von Komponenten oder neue Versionen mit neuen Komponenten können, rein softwaretechnisch betrachtet, an jeder beliebigen Stelle in der Topologie eingegliedert werden). Dadurch Verbesserungen der Stabilität bei Folgeversionen, Testaufwand gering,...
* kleine und große, flexible und topologisch unbekannte Systeme können somit von einer Software in Betrieb genommen werden.
* automatische oder kundenausgelöste Erweiterung der Sichtweite der zu aktivierenden Einheiten sind möglich.

### Wichtige Merkmale der Erfindung:

* Bildung von Komponentengruppen (= HW-Komponente mit zugehöriger SW-Funktion) mit gleichen Eigenschaften
* Bildung von Hierarchien, die die Abhängigkeiten zwischen den Komponentengruppen bzgl. der Anlaufreihenfolge berücksichtigen
* durch Folgehierarchie Überprüfung des Aktivierungsfortschritt (=Startbedingungen erfüllt?) aller Komponenten der Vorgängerhierarchie für den Start weiterer Komponenten

Die genannten Merkmale bringen u.a. folgende Vorteile:
1. Hardwareunabhängigkeit: Es ist nicht wichtig, wie die Komponenten heißen, nur welche Abhängigkeiten zwischen Ihnen bestehen
2. innerhalb von Hierarchien sind parallele Inbetriebnahmen möglich.
3. Hierarchien verbessern den deterministischen Hochlauf (Hochlauf soll so weit wie möglich deterministisch sein, damit die Wahrscheinlichkeit eines erfolgreichen Anlaufes erhöht wird)
4. allgemeine Vorteile: siehe oben

### Weitere wichtige Merkmale der Erfindung:

* Festlegung von Reihenfolgen für Komponentengruppen innerhalb einer Hierarchiestufe
* Festlegung von Startzeitpunkten für Folgeaktivierungen von Komponentengruppen innerhalb einer Hierarchiestufe. Diese Festlegung erfolgt in der Requirementphase, Analyse-,(siehe oben). Sie hängt von den SW-Funktionen der Komponenten ab, z.B. muß ein Prozessor bestimmte Daten haben (zu einem bestimmten Zeitpunkt (Synchronisationspunkt SP), bevor die nächste Komponentengruppe gestartet und mit Teilen dieser Daten geladen werden kann oder z.B. Halten stabiler Verbindungen (PVCs) ist während eines systemweiten Hochlaufes, z.B. nach einem HW-Reset, nur möglich, wenn diejenigen Komponenten, die redundant sind, einen Aktivierungsfortschritt erreichen, bei dem man dann auf sie umschalten kann.
* Bewertung von Zuständen
* vollständiges Abbilden dieser Daten in das Datenbankobjektmodell.

Als Folge der genannten (von der Steuerungs-SW getrennten) Informationen kann die Steuerungssoftware sehr allgemein, d.h. sehr generisch gehalten werden, wodurch sie zur Aktivierung für beliebige Topologien geeignet ist.

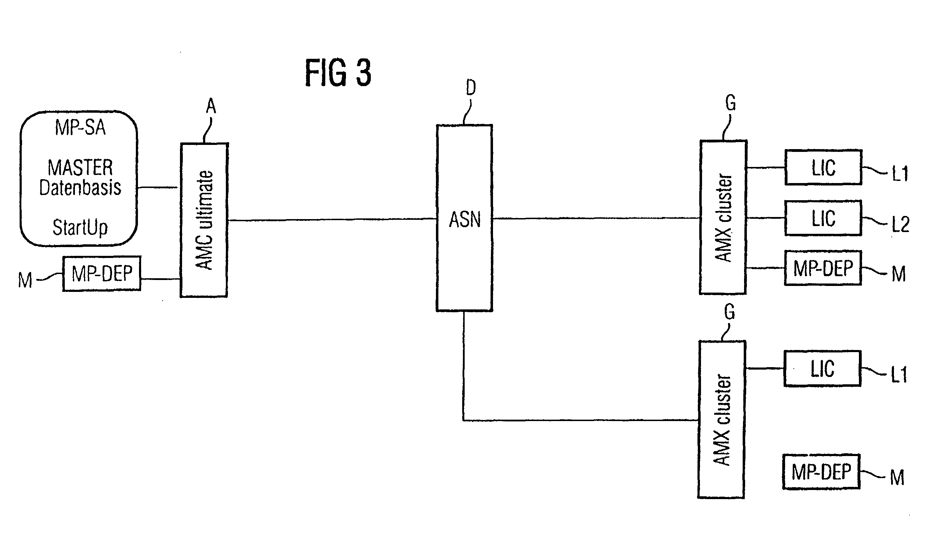

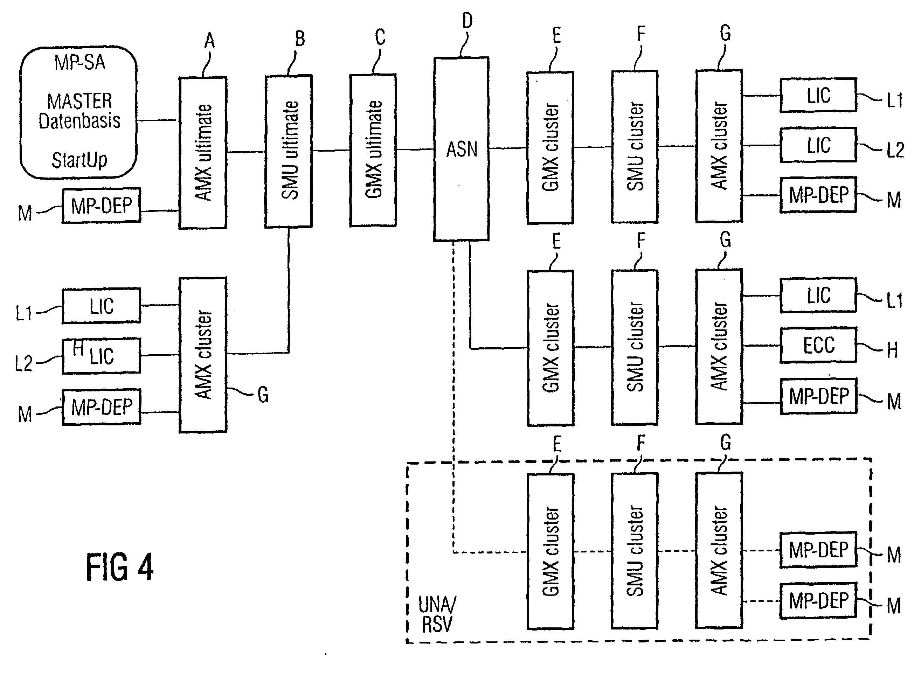

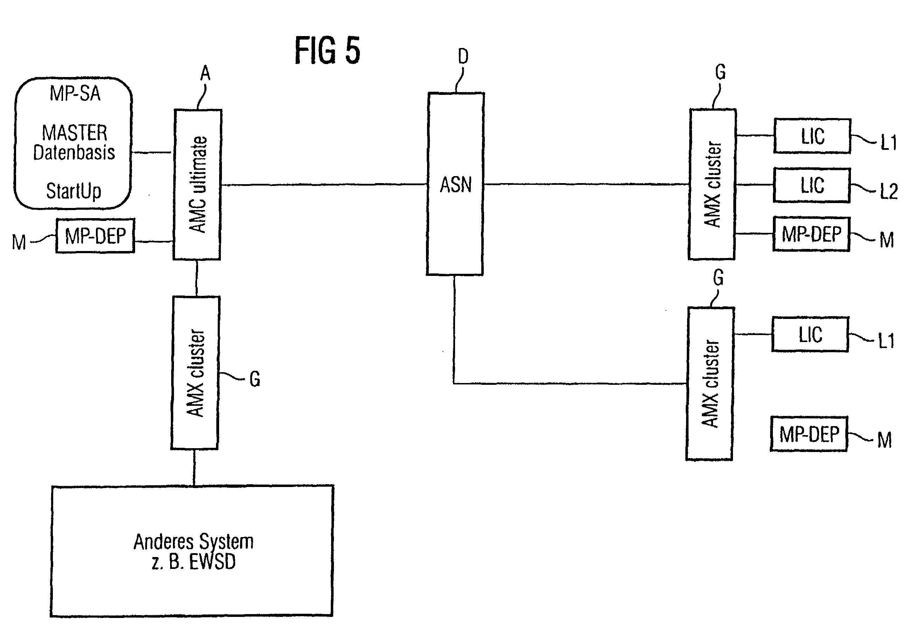

Die folgenden Beispiele in den Figuren 3, 4, und 5 sollen die unterschiedlichen Topologien dreier beispielhafter Systeme veranschaulichen, die mit der selben Steuerungs-Software in Betrieb genommen werden können.

FIG 3 und 4 zeigen die Topologien von Varianten eines beispielhaften Systems EWSX, wobei die Reihenfolge des Anlaufs der Komponenten bereits in FIG 2 dargestellt ist.

### FIG 5 zeigt die Topologie eines beispielhaften Systems SSNC

Die Anwendung der Erfindung ist auch in anderen technischen Systemen denkbar, z.B.
- vollautomatische Lagerverwaltung
   Inbetriebnahme der Computer
      Datenverteilung zu deren angeschlossenen
      Transportbänder /- geräten
   Inbetriebnahme der Transporteinheiten ...
- Bundesbahn
- ...

## Patentansprüche

1. Steuerungssystem zur Steuerung der Inbetriebnahme eines verteilten Systems, das mehrere Komponenten, umfaßt, wobei unter einer Komponente ein Prozessor mit mindestens einer SW-Funktion oder eine Gruppe von Prozessoren, die jeweils mindestens eine SW-Funktion enthalten, verstanden wird, mit
a) einer Steuerungs-Komponente, die die Inbetriebnahme des Systems steuert,
b) einer Datenbasis, in der bezüglich jeder Komponente Daten gespeichert sind, die Eigenschaften einer jeweiligen Komponente bezüglich der Steuerung der Inbetriebnahme beschreiben, wobei
c) die Steuerungs-Komponente zur Anlaufzeit aus der Datenbasis bezüglich jeder Komponente die genannten Daten ausliest und anhand der ausgelesenen Daten die Inbetriebnahme des Systems steuert.

2. Steuerungssystem nach Anspruch 1, wobei
die genannte Steuerungs-Komponente die Inbetriebnahme des Systems steuert, indem sie anhand der genannten ausgelesenen Daten zum einen diejenigen Komponenten herausfiltert, die sie in die Inbetriebnahme miteinbezieht und zum anderen die Aktivierungsreihenfolge der herausgefilterten Komponenten ermittelt.

3. Steuerungssystem nach Anspruch 1 oder 2, wobei
die genannten ausgelesenen Daten Informationen über Einteilungen von Komponentengruppen und/oder Prozessoren und/oder Einheiten und/oder Plattformen in Hierarchien enthalten.

4. Steuerungssystem nach einem der Ansprüche 1 bis 3, wobei
die genannten ausgelesenen Daten auch Informationen über Zustände von Komponenten enthalten.

5. Steuerungssystem nach einem der Ansprüche 1 bis 4, mit
einer Schnittstelle, über die ein Betreiber mittels Kommando die Sichtweise einer Komponente selektieren kann.

6. Steuerungssystem nach einem der Ansprüche 4 oder 5, wobei
die Steuerungssoftware die Totalausfallerkennung vor der Durchführung des Anlaufs befragt, ob Totalausfall vorliegt, worauf die Totalausfallerkennung anhand der Zustände der Komponenten ermittelt, ob die durchzuführende Aktivierung des Gesamtsystems die gewollte SW-Funktion des Kunden als Ganzes bereitstellen kann.

## Claims

1. Control system for controlling the starting up of a distributed system which comprises a number of components, in which case the term component means a processor having at least one software function or a group of processors which each contain at least one software function, having
a) a control component which controls the starting up of the system
b) a database in which data related to each component are stored, which data describe the characteristics of a respective component in terms of control of the starting-up process, in which case
c) the control component reads said data relating to the start-up time for each component from the database, and uses the data which have been read to control the process of starting up the system.

2. Control system according to Claim 1,
in which
said control component controls the process of starting up the system in that it uses said data which have been read firstly to filter out those components which it will include in the starting-up process, and secondly to determine the activation sequence of the filtered-out components.

3. Control system according to Claim 1 or 2,
in which
said data which have been read out contain information about subdivisions of component groups and/or processors and/or units and/or platforms in hierarchies.

4. Control system according to one of Claims 1 to 3,
in which
said data which have been read out also contain information about component statuses.

5. Control system according to one of Claims 1 to 4,
having
an interface via which an operator can use a command to select the scope of a component.

6. Control system according to one of Claims 4 or 5,
in which,
in order to identify the total failure before carrying out the start-up process, the control software asks whether a total failure has occurred, in which case the total failure identification then uses the component statuses to determine whether the activation of the overall system to be carried out can provide the desired software function of the customer as an entity.

## Revendications

1. Système de commande pour la commande de la mise en service d'un système réparti qui comprend plusieurs composants, un composant devant être compris comme un processeur ayant au moins une fonction logicielle ou comme un groupe de processeurs qui comportent chacun au moins une fonction logicielle, avec
a) un composant de commande qui commande la mise en service du système,
b) une base de données, dans laquelle sont mémorisées pour chaque composant des données qui décrivent des propriétés d'un composant respectif quant à la commande de la mise en service,
c) le composant de commande lisant lesdites données pour le temps du démarrage à partir de la base de données pour chaque composant et commandant la mise en service du système à l'aide des données lues.

2. Système de commande selon la revendication 1, dans lequel ledit composant de commande commande la mise en service du système en filtrant à l'aide desdites données lues d'une part les composants qu'il inclut dans la mise en service et d'autre part l'ordre d'activation des composants filtrés.

3. Système de commande selon la revendication 1 ou 2, dans lequel lesdites données lues contiennent des informations sur des divisions de groupes de composants et/ou de processeurs et/ou d'unités et/ou de plates-formes en hiérarchies.

4. Système de commande selon l'une des revendications 1 à 3, dans lequel lesdites données lues contiennent aussi des informations sur les états des composants.

5. Système de commande selon l'une des revendications 1 à 4, avec une interface par l'intermédiaire de laquelle un exploitant peut sélectionner au moyen d'instructions la portée d'un composant.

6. Système de commande selon l'une des revendications 4 ou 5, dans lequel le logiciel de commande interroge la détection de panne totale avant l'exécution du démarrage pour savoir s'il y a panne totale, à la suite de quoi la détection de panne totale détermine à l'aide des états des composants si l'activation à effectuer du système global peut fournir complètement la fonction logicielle voulue par le client.
